# EUROPEAN PATENT APPLICATION

(11) **EP 1 078 871 A1**
(43) Date of publication of application: **28.02.2001**
(21) Application number: 00202934.6
(22) Date of filing: 22.08.2000
(51) Int. Cl.: B65G 47/44, B65G 41/00, B65G 15/22, B65G 47/58

(54) **Conveyor inter alia suitable for barning tuberous crops**

(30) Priority: 23.08.1999 NL 1012875
(71) Applicant: Miedema Landbouwwerktuigenfabriek B.V., 8831 XA Winsum (NL)
(72) Inventor: Wondergem, Jan, 8607 KC Sneek (NL); Van Duijn, Edwin Albertus, 8561 AC Balk (NL)
(74) Representative: Aalbers, Arnt Reinier

(57) **Abstract**

A conveyor inter alia suitable for barning tuberous crops, comprising a first conveyor belt (1), whose supply end (3) is pivotably mounted in a frame or chassis about a horizontal axis (4), and a second conveyor belt (7) for supplying tuberous crops to the supply end (3) of the first conveyor belt (1). Conveying elements (8) are provided, which conveying elements (8) are positioned in line with the first conveyor belt (1) and under the discharge end of the second conveyor belt (7).

## Description

The invention relates to a conveyor which is inter alia suitable for barning tuberous crops, comprising a first conveyor belt, whose supply end is pivotably mounted in a frame or chassis about an imaginary horizontal axis, and a second conveyor belt for supplying tuberous crops (for example coming from a truck) to the supply end of the first conveyor belt.

In conveyors of this kind it is usual to position the discharge end of the second conveyor belt above the supply end of the first conveyor belt. Tuberous crops, such as potatoes, sugar beets, cabbages or the like, fall off the second conveyor belt as soon as they reach the discharge end thereof and land on the supply end of the first conveyor belt. The first conveyor belt then carries the tuberous crops to the storage location, where a stack is formed.

As the stack increases in height, the discharge end of the first conveyor belt is moved up by pivoting said conveyor belt about said horizontal axis. This upward movement will be quickly obstructed by the presence of the second conveyor belt. Accordingly, it is usual to move the second conveyor belt upwards as well and thus make room for the first conveyor belt. The height of drop of the tuberous crops is thus increased, however, as a result of which the risk of damage is increased considerably.

The object of the present invention is to minimize the risk of damage to tuberous crops, such as potatoes, sugar beets, cabbages or the like, that are to be stacked or barned.

In order to accomplish that objective, the conveyor according to the invention is characterised in that conveying elements are provided, which conveying elements are positioned in line with the first conveyor belt and under the discharge end of the second conveyor belt.

Owing to these additional conveying elements, which may comprise a chute or a short conveyor belt, for example, the height of drop (that is, the distance between the discharge end of the second conveyor belt and the additional conveying elements) of the tuberous crops coming from the second conveyor belt can be maintained constant and, in addition, be adapted to a specific tuberous crop.

In one preferred embodiment the conveying elements are fixedly mounted with respect to the imaginary horizontal axis of the first conveyor belt. This prevents the first conveyor belt from being obstructed by the conveying elements, for example when making a pivoting movement which may be necessary to increase the width of a stack of tuberous crops.

When the conveying elements are fixedly mounted with respect to the first conveyor belt, it is preferable that said conveying elements (and thus the first conveyor belt) can pivot or swivel about an imaginary vertical axis, which axis intersects the conveying elements. The pivoting or swivelling point is located under the conveying elements in that case and, preferably, spaced from said horizontal axis by some distance, as a result of which the position of the conveying elements with respect to the discharge end of the second conveyor belt is ensured at all times.

The invention will now be explained in more detail with reference to the drawings, which show an exemplary embodiment of the present conveyor.
Fig. 1 is a schematic view of a conveyor according to the invention, showing four different positions thereof.
Fig. 2 is a larger-scale representation of the main parts of the conveyor of Fig. 1.

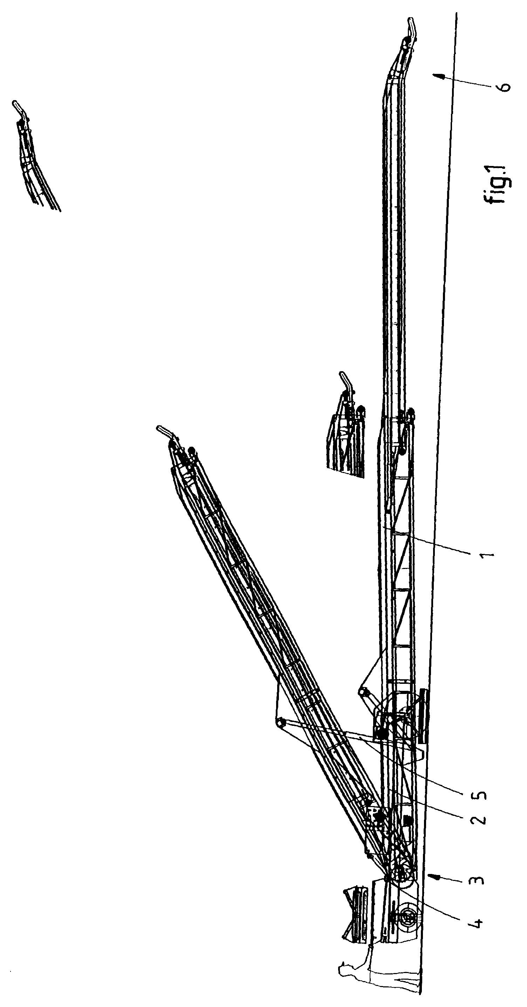

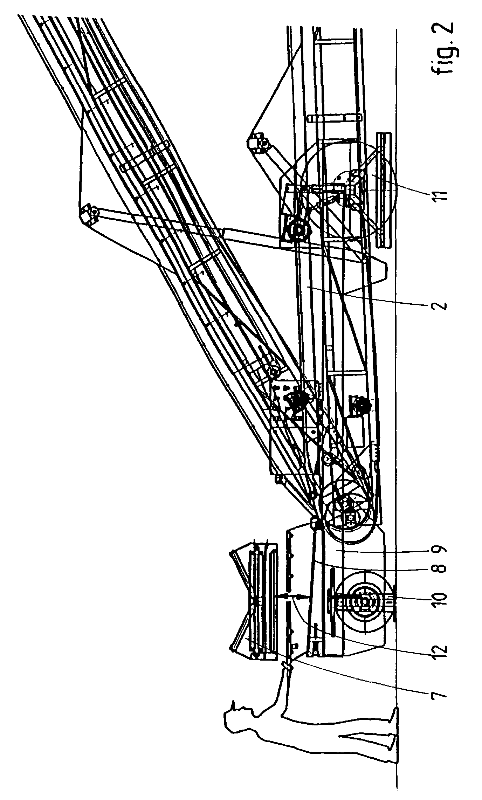

Figs. 1 and 2 show a conveyor according to the invention, comprising a first conveyor belt 1, which is of the so-called telescopic type in this embodiment. The first conveyor belt 1 is mounted in a chassis 2 and is capable of pivoting movement about a horizontal axis 4 at its supply end 3. Said pivoting movement is effected by means of hydraulic cylinders 5, which are each connected, at some distance from horizontal axis 4, both to chassis 2 and to first conveyor belt 1. The discharge end 6 of the first conveyor belt 1 can be extended due to the fact that conveyor belt 1 is telescopic.

Present under the discharge end of a second conveyor belt 7, which extends at an angle with, e.g. transversely to the first conveyor belt 1, is a chute 8, which slopes down in the direction of the supply end of the first conveyor belt 1. Chute 8 is mounted on a frame 9, which frame 9 is fixedly connected to chassis 2 or is integral therewith. As a result, the position of chute 8 with respect to horizontal axis 4 is fixed.

Chute 8 and frame 9 are pivotable about a vertical axis 10, which is spaced from horizontal axis 4 by some distance, which distance is preferably approximately equal to or larger than half the width of the second conveyor belt 7. Thus, the angle between the transport direction of the first conveyor belt 1 and the transport direction of the seond conveyor belt 7 can be varied e.g. within a range from 15 to 165 degrees. In this example the vertical axis 10 is positioned central both under chute 8 and under the discharge end of the second conveyor belt 7.

The swivelling movement of the assembly consisting of chute 8, frame 9, chassis 2 and first conveyor belt 1 is furthermore enabled by castor wheels 11, which are mounted on chassis 2 near the hydraulic cylinders 5.

From the foregoing it will be apparent that in the configuration according to the invention the (average) height of drop 12, that is, the distance between the discharge end of the second conveyor belt 7 and the upper surface of chute 8, can remain constant during barning or stacking. In addition to that, height of drop 12 can be adapted to the crop to be barned or stacked (a larger product will generally require a larger height of drop 12 than a smaller product).

Both advantages can be realised without any risk of the movement of the first conveyor belt 1 being obstructed. After all, the discharge end of the second conveyor belt 7 is no longer positioned above the supply end of the first conveyor belt 1, so that the upward movement of the latter cannot be obstructed. Furthermore, the distance between second conveyor belt 7 and the assembly of chute 8, frame 9, chassis 2 and first conveyor belt 1 is so large that this assembly can pivot about the vertical axis 10 without the supply end of the first conveyor belt 1 coming too close to the discharge end of the second conveyor belt 7.

It is preferable that the imaginary horizontal axis 4, about which the supply end 3 of the first conveyor belt 1 can pivot with respect to chassis 2, is positioned near the transition from chute 8 to first conveyor belt 1.

Generally the first conveyor belt 1 will comprise an endless belt which is passed over two cylinders or drums, one at the supply end and one at the discharge end. If the imaginary horizontal axis 4 is present between the axis of the cylinder or drum at the supply end of the first conveyor belt 1 and the transition from chute 8 to said first conveyor belt, possible obstruction of upward movement of the first conveyor belt 1 is reduced or even avoided in an effective manner.

The invention is not limited to the embodiment as described above and shown in the drawing, which can be varied in several ways without departing from the scope of the claims. Thus the terms "horizontal" and "vertical" also include "substantially horizontal" and "substantially vertical", respectively.

## Claims

1. A conveyor inter alia suitable for barning tuberous crops, comprising a first conveyor belt (1), whose supply end (3) is pivotably mounted in a frame or chassis about a horizontal axis (4), and a second conveyor belt (7) for supplying objects to the supply end (3) of the first conveyor belt (1), **characterised in that** conveying elements (8) are provided, which conveying elements (8) are positioned in line with the first conveyor belt (1) and under the discharge end of the second conveyor belt (7).

2. A conveyor according to claim 1, wherein said conveying elements (8) are fixedly mounted with respect to the imaginary horizontal axis (4).

3. A conveyor according to claim 2, wherein said conveying elements (8) can pivot about an imaginary vertical axis (10), which intersects the conveying elements (8).

4. A conveyor according to claim 3, wherein said vertical axis (10) is spaced from the horizontal axis (4) by some distance.

5. A conveyor according to claim 4, wherein said distance is approximately equal to or larger than half the width of the second conveyor belt (7).

6. A conveyor according to any one of the preceding claims, wherein the imaginary horizontal axis (4), about which the supply end (3) of the first conveyor belt (1) can pivot, is located near the transition from the conveying elements (8) to the first conveyor belt (1).

7. A conveyor according to claim 6, wherein the first conveyor belt (1) comprises an endless belt which is passed over two cylinders or drums, and wherein the imaginary horizontal axis (4) is present between the axis of the cylinder or drum at the supply end (3) and the transition from the conveying elements (8) to said first conveyor belt (1).

8. A conveyor according to any one of the preceding claims, wherein said conveying elements comprise a chute (8) or a short conveyor belt.
